Europäisches Patentamt

European Patent Office

Office européen des brevets

(19)

(11) Veröffentlichungsnummer : **0 573 413 B1**

(12)  # EUROPÄISCHE PATENTSCHRIFT

(45) Veröffentlichungstag der Patentschrift :
**11.01.95 Patentblatt 95/02**

(51) Int. Cl.$^6$ : **G11B 20/10,** G11B 20/12

(21) Anmeldenummer : **91905080.7**

(22) Anmeldetag : **02.03.91**

(86) Internationale Anmeldenummer :
**PCT/EP91/00389**

(87) Internationale Veröffentlichungsnummer :
**WO 91/14265 19.09.91 Gazette 91/22**

(54) **VERFAHREN UND GERÄT ZUR AUFZEICHNUNG UND/ODER WIEDERGABE VON DIGITALEN DATEN AUF EINEM AUFZEICHNUNGSTRÄGER UND AUFZEICHNUNGSTRÄGER.**

(30) Priorität : **12.03.90 DE 4007814**

(43) Veröffentlichungstag der Anmeldung :
**15.12.93 Patentblatt 93/50**

(45) Bekanntmachung des Hinweises auf die
Patenterteilung :
**11.01.95 Patentblatt 95/02**

(84) Benannte Vertragsstaaten :
**AT BE CH DE DK ES FR GB GR IT LI LU NL SE**

(56) Entgegenhaltungen :
**EP-A- 0 268 454**
**FR-A- 2 261 586**
**FR-A- 2 317 726**
**US-A- 4 506 303**

(73) Patentinhaber : **Deutsche Thomson-Brandt
GmbH
Postfach 1307
D-78003 Villingen-Schwenningen (DE)**

(72) Erfinder : **SCHRÖDER, Ernst, F.
Pinkenburger Str. 25D
D-3000 Hannover 51 (DE)**

## Beschreibung

Berührungslos abtastbare rotierende Aufzeichnungsträger wie z.B. Compact Disc (CD) oder Magneto-Optische-Disc (MOD) sind dazu geeignet, digitale Daten, vorzugsweise digitale Audio- oder Videodaten, in großen Mengen zu speichern. Diese Aufzeichnungsträger weisen vorzugsweise eine spiralförmige Spur auf. Während des Aufzeichnungs- oder Abspielbetriebes rotiert der Aufzeichnungsträger in der Weise, daß die Spur mit einer konstanten Bahngeschwindigkeit (Standard bei CD: 1,2 m/sec) an einer radial verstellbaren Abtastaufzeichnungseinheit oder Abtastabspieleinheit (Laser) vorbeigeführt wird. Für die konstante Bahngeschwindigkeit sorgt im Aufzeichnungs- oder Abspielgerät ein CLV-System (Constant Linear Velocity).

Bei bisherigen Aufnahmeverfahren werden die digitalen Daten mit einer für die gesamte Aufzeichnung jeweils festgelegten Netto-Datenrate kontinuierlich vom Anfang der Spur bis zum Ende der Spur des Aufzeichnungsträgers aufgenommen. Dies hat den Nachteil, daß für eine Aufzeichnung von Daten auf dem Aufzeichnungsträger die entsprechenden Daten auch kontinuierlich zur Verfügung gestellt werden müssen (kann durch Master-Bänder realisiert werden). Da dies für die große Speicherkapazität solcher Aufzeichnungsträger nicht immer möglich ist, wird die individuelle Aufzeichnung von Daten eingeschränkt.

Bei Standard-Audio-Aufzeichnung im CD-Format beträgt die Datenrate 1,4112 M Bit/sec (= 16 Bit (pro Abtastwert) ∗ 44,1 kHz (Standard-Abtastfrequenz bei CD) ∗ 2 ( für Stereo)). Mit einer so großen Netto-Datenrate (Netto-Datenrate ist die Datenrate, die gebraucht wird, um z.B. 1 Sekunde Toninformation, oder 1 Sekunde Bildinformation zu speichern, übertragen u.s.w.) sind pro Aufzeichnungsträger jeweils Spielzeiten von etwa 60 min. erreichbar. Zur Verlängerung der Aufzeichnungszeit und damit der Abspielzeit bei gleichbleibender Abtastfrequenz und Stereoaufnahme sind Datenreduktionsverfahren bekannt, die nicht alle 16 Bit pro Abtastwert am Ausgang des A/D-Wandlers aufzeichnen. Hier sind beispielsweise NIC (Near Instantaneous Companding), MSC (Mehrfach adaptive spektrale Audio-Codierung), DPCM (Differenz Pulse-Code Modulation), ADPCM (Adaptive Differenz Pulse-Code-Modulation) oder Deltamodulation zu erwähnen, mit denen datenreduzierte Ton-Aufnahmen ohne gravierende Qualitätsverluste gegenüber Standard-CD-Aufnahmen zu erreichen sind, wobei die Spielzeit bis zu 4 Stunden pro Aufzeichnungsträger verlängert wird.

Aus FR-A- 2261586 ist ein Verfahren bekannt, wobei Daten mehrerer Kanäle verschachtelt in mehreren Umdrehungen aufgezeichnet werden bis alle Daten zusammen etwa die maximale physikalische Datenrate der Spur aufweisen. Die Daten werden mit der Netto-Datenrate aufgezeichnet.

Der Erfindung liegt die Aufgabe zugrunde, auf einem Aufzeichnungsträger eine Datenaufzeichnung und-/oder -abtastung mit wahlfreiem Lese- und Schreibzugriff zu gewährleisten.

Die Aufgabe wird durch die im ersten Patentanspruch aufgeführten Merkmale gelöst. Vorteilhafte Weiterbildungen der Erfindung ergeben sich aus den Unteransprüchen.

Im Prinzip wird die bisher übliche kontinuierliche Aufzeichnung von digitalen Daten durch eine burstweise Aufzeichnung ersetzt, wobei jeder Burst Daten in sich kontinuierlich aufgenommen wird. Durch die burstweise Aufzeichnung der Daten bildet vorzugsweise jeder Burst auf dem Aufzeichnungsträger einen Cluster. Mit einem Burst Daten ist eine festgelegte Menge von Daten, z. B. eines oder mehrerer Bit gemeint. Unter einem Cluster ist das Teilstück einer Spur zu verstehen, das im wesentlichen einen Burst Daten enthält. Eine Aufzeichnung mit solchen Clustern sei im folgenden als "Cluster Recording" bezeichnet.

Bei diesem Aufzeichnungsverfahren ist es ohne Belang, ob die Datenrate der aufzuzeichnenden Daten, insbesondere Tondaten, mittels eines oder verschiedener Datenreduktionsverfahren reduziert wurde.

Mit Hilfe des im folgenden beschriebenen "Cluster Recording" ist es unter anderem möglich, folgende Betriebsarten aufzuführen:

1. Datenaufzeichnung mit wahlfreiem Lese- und Schreibzugriff von Daten auch mit unterschiedlichen Netto-Datenraten.
2. Eine Longplay (> 1 h) Tonaufzeichnung mit Hilfe eines Ton-Daten-Reduktionsverfahrens wie z.B. MSC.
3. Eine extreme Longplay (bis zu 84 h) Sprachaufzeichnung.

Die Daten werden vorzugsweise wie beim CD-Standard-Aufzeichnungsformat mit der unveränderten Abtastgeschwindigkeit von 1,2 Meter/sec und der Abtastfrequenz von 44,1 kHz und somit der Standard-CD-Datenrate von 1,411 Mbit/sec aufgezeichnet, so daß am CLV-System und den Entzerrerschaltungen bisher üblicher Aufzeichnungs- und Abspieleinheiten keine Veränderungen erforderlich sind.

Somit enthält eine Aufzeichnung von 1,411 Mbit auf dem Aufzeichnungsträger, die beispielsweise mittels MSC-Verfahren Daten reduziert wurden, nicht Informationen für nur eine Sekunde Tonaufzeichnung wie bei CD-Standard, sondern ungefähr 4 Sekunden.

Dazu ist es vorteilhaft, die aufzuzeichnenden Daten mit einem Fehlerschutzcode, wie z.B. Cross-Interleaved-Reed-Solomon-Code (CIRC) zu versehen, vor der Aufzeichnung zu interleaven und mittels eines Kanalcodes z.B. EFM-Code (eight to fourteen modulation) auf dem Aufzeichnungsträger aufzuzeichnen, wobei durch den EFM-Code die Daten in EFM-Frames strukturiert werden. Vorzugsweise enthält jeder EFM-Frame 24 Byte Nutzdaten.

Es ist vorteilhaft, wenn die Spur des Aufzeichnungsträgers spiralförmig ist und mit eindeutigen Positionsdaten vorzugsweise mittels des ATIP-Verfahren vorformatiert ist. Dadurch kann auf jeden Burst Daten und damit auf jedes Cluster auf dem Aufzeichnungsträger einzeln zugegriffen werden, um die entsprechenden Daten z.B. zu löschen, neu zu schreiben oder zu lesen usw.. Eine solche Datenaufzeichnung mit wahlfreiem Lese- und Schreibzugriff hat insbesondere bei Rechnern große Vorteile. Eine individuelle Aufzeichnung von z.B. Ton-Daten wird dadurch erst möglich.

Es ist von Vorteil, die Länge eines Clusters so auszulegen, daß sie dem ganzzahligen Vielfachen eines ATIP-Blocks und damit dem ganzzahligen Vielfachen eines EFM-Frames entspricht. Somit ist die eindeutige Zugehörigkeit eines ATIP-Blocks und eines EFM-Frames zu einem Cluster festgelegt, was vor allem die eindeutige Adressierbarkeit eines Clusters gewährleistet.

Zur Verbesserung einer fehlerfreien Aufzeichnung wird vorzugsweise vor dem Schreiben eines Clusters CL2 das vorhergeschriebene Cluster CL1 wiedergelesen und bei fehlerhafter Aufzeichnung das Cluster CL1 neu aufgezeichnet und das fehlerhafte Cluster markiert, um bei Abspielen des Aufzeichnungsträgers eine Wiederholung und ein Abspielen des fehlerhaften Olusters zu vermeiden.

Im folgenden wird die Erfindung anhand eines in der Zeichnung dargestellten Beispiels näher erläutert.

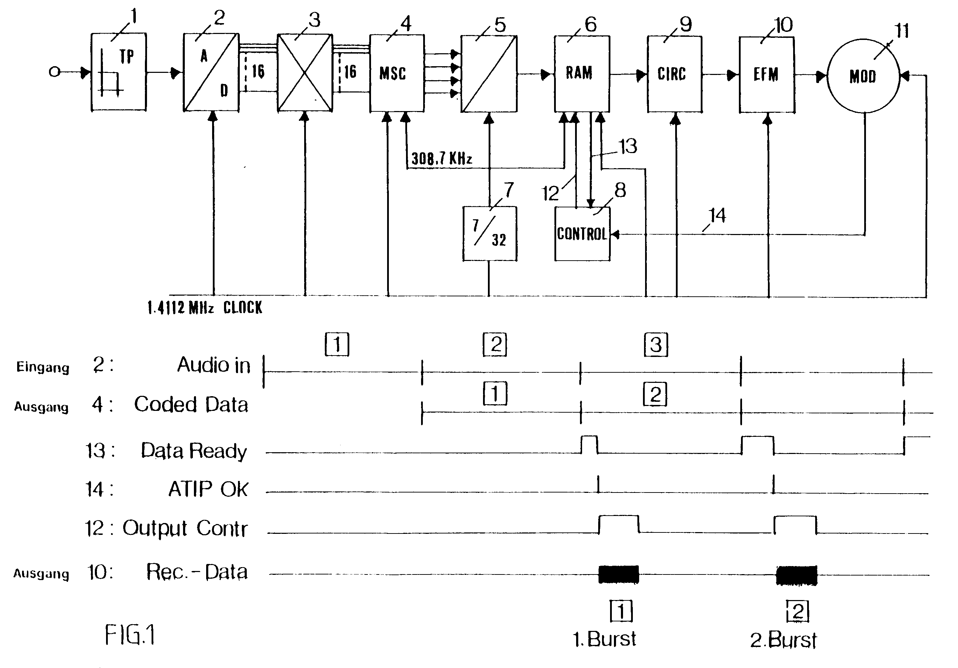

Fig. 1 zeigt eine eine Blockschaltung zur Aufzeichnung eines Ton-Kanals mit MSC-Datenreduktion, die in einem Aufzeichnungsgerät realisiert ist.

Nach Herausfilterung des analogen Signals mittels eines Tiefpasses 1 und Abtastung mittels eines 16-Bit-Analog-/-Digital-Wandlers 2 stehen an dessen Ausgang je Abtastimpuls 16 Bit zur weiteren Verarbeitung an. Diese Abtastwerte werden - jeweils zu Blöcken arrangiert - in einem speziellen Rechenwerk 3 einer Fourier-Transformation unterworfen. Ergebnis ist für jeden Block ein Satz von 1024 Spektralkoeffizienten, der z.B. auch mit einem, der Meßtechnik gebräuchlichen, digitalen Spektralanalysator gewonnen werden könnte. Die Betrag- und Phasenwerte werden nun in einem MSC-Coder 4 mehrfach adaptiv codiert, d.h. wichtige Koeffizienten werden mit vielen Bit (bis zu 14) dargestellt und übertragen, weniger wichtige Bit nur wenigen Bit. Sehr kleine unwichtige Koeffizienten werden zu Null gesetzt und nicht übertragen. Die in einem solchen Fall "eingesparten Bit" werden anderen wichtigen Koeffizienten zugeschlagen, die dann entsprechend genau übertragen werden.

Nach der MSC-Datenreduktion verlassen die digitalen Daten den Coder 4 mit 308,7 kHz und werden einem Parallel-Seriell-Wandler 5 zugeführt, dessen Ausgang mit dem Dateneingang eines Zwischenspeichers 6 verbunden ist. Während der Einlesetakt des Zwischenspeichers 308700 Hz beträgt, ist der Auslesetakt 1,4112 MHz. Für die Umsetzung des 1,4112 Mhz Clock Taktes auf 308,7 kHz sorgt ein 7/32 Frequenzteiler 7.

Der Zwischenspeicher wird von einer Kontrolleinheit 8 gesteuert, die unter anderem das aktuelle Positionsdatum 14 auf dem Aufzeichnungsträger 11 mit dem Soll-Positionsdatum vergleicht. Erst wenn im Zwischenspeicher 6 mindestens so viele Daten wie im eingestellten Soll-Burst vorgesehen gespeichert sind, meldet der Zwischenspeicher über die Signalleitung 13 "Data Ready". Wenn die Aufzeichnungseinheit ihre Soll-Position erreicht hat, wird über "Output Control" 12 das Auslesen des Speichers aktiviert und der entsprechende Burst Daten aus dem Zwischenspeicher mit der CD-Standard-Aufzeichnungsdatenrate von 1,4112 Mbit pro Sekunde ausgelesen und in einem Read-Solomon-Codierer 9 mit einer CIRC-Fehlerschutzcode (Cross-Interleaved-Reed-Solomon-Code) versehen und einem Interleaving (Codespreizung) unterworfen. Für das Interleaving ist in dem Coder 9 ein Interleaving-Speicher (nicht dargestellt) angeordnet. Den zeitlichen Ablauf der Verarbeitung und Aufzeichnung digitaler Daten zeigt ein Schaubild in Fig. 1.

Weil ein berührungslos abtastbarer Aufzeichnungsträger 11 wie die MOD, mit verschiedenen physikalischen Fehlern behaftet sein kann, die sich bei der Produktion der Platten nie mit Sicherheit vermeiden lassen, werden die aufzuzeichnenden Audiosignale nach diesem speziellen Codierverfahren codiert. Die in dem Reed-Solomon-Codierer 9 codierten Daten werden in einem Modulator 10 einer EFM-Modulation (eight to fourteen modulation) unterworfen und mit Hilfe dieses Leitungscodes auf der MOD aufgezeichnet, wobei die Daten durch die EFM-Modulation in EFM-Frames strukturiert werden. Dies ist auch das auf der Compact-Disc verwendete Format.

Die Organisation der Aufzeichnung ist so, daß jeweils 24 Byte Nutzdaten (= 6 Stereoabtastewerte mit je 16 Bit) in einem EFM-Frame aufgezeichnet werden. Infolge des Interleaving gehören die 24 Byte Daten in einem Frame aber nicht zu benachbarten Abtastwerten der Eingangsnutzdaten. Die zu benachbarten Abtastwerte gehörenden Daten sind über ca. 110 aufeinanderfolgende Frames verstreut. Dies verbessert den Fehlerschutz.

Die Abtastung oder Wiedergabe von Daten auf dem Aufzeichnungsträger erfolgt im Prinzip reziprok zur Aufzeichnung.

Die hier als berührungslos abtastbare rotierende Aufzeichnungsträger verwendete Magneto-Optischer Disc (MOD) 11 weist eine vorformatierte spiralförmige Spur auf, die Daten zur Kennzeichnung einer absoluten Position und zur Steuerung der Abtasteinheit enthält. Die Vorformatierung ist mit der ATIP (absolute time in pre-groove) Methode durchgeführt. Hierzu ist die Spur horizontal moduliert und zwar mit einer der Audio-Abtastfrequenz proportionalen Frequenz (22,05 kHz). Diese Frequenz dient auch zur Synchronisierung eines CLV-Servos in der Aufzeichnungseinheit und/oder Wiedergabeeinheit. Diese Frequenz ist ihrerseits in einem Bi-Phase Format mit den ATIP-Daten phasenmoduliert. Die dabei erzielbare Datenrate ist relativ gering, reicht aber zur Aufzeichnung von absoluten Positionsdaten im oben beschriebenen Format.

Eine ATIP-Information kann während des Schreibens und Lesens der Daten auf den Aufzeichnungsträger ständig gelesen werden und über die Signalleitung 14 an die Kontrolleinheit 8 abgegeben werden.. Bei der MOD ist dies dadurch gegeben, daß ATIP-Informationen mit Hilfe der Schreib/Lese-Einheit (Laser) gelesen wird und über die Spurhalteinrichtung ausgewertet werden kann, die auch während des Schreibens und Lesens arbeitet.

Der Zeitabschnitt auf dem Speichermedium der eine solche ATIP-Information enthält, werde im folgenden ATIP-Block genannt. Das Format auf der MOD ist so gestaltet, daß während eines ATIP-Blocks 98 EFM-Frames aufgezeichnet oder gelesen werden.

Auf einem wie vorstehend beschriebenen Aufzeichnungsträger sind mit Hilfe von ATIP also auch bisher noch unbeschriebene Stellen der vorformatierten Spur exakt zu finden. Die Genauigkeit ist dabei durch die Anzahl der EFM-Frames gegeben, hier also auf 98 Frames genau. Bei einer MOD im beschriebenen Format und bei einer Abtastgeschwindigkeit von 1,2 m/sec (wie bei CD) hat ein EFM-Frame eine Länge von 136,05 $\mu$sec, ein ATIP-Block also 13,3 msec bzw. 1/75 sec.

Ein Suchvorgang nach einem bestimmten ATIP (n)-Block erfolgt immer so, daß der davor liegende ATIP (n-1)-Block gelesen wird. Ist dieser Block decodiert, ist es bekannt, daß der gewünschte Block unmittelbar folgt und nun gelesen oder beschrieben werden kann.

Der Suchvorgang läuft wie folgt ab:

1. Lesen der aktuellen ATIP

2. Entscheiden, ob nun Warten von bis zu einer Umdrehung reicht oder ein Sprung nötig ist

3. Sprungbefehl von Mechanik

4. Lesen ATIP auf (evtl. zufälligem) Ziel

5. Entscheidung, ob neues Spurspringen zur Korrektur oder nur Warten von bis zu einer Umdrehung nötig ist

6. Lesen ATIP bis ATIP (n-1).

Die gewünschte Aufzeichnung erfolgt so, daß die aufzuzeichnenden digitalen Daten, wie oben erwähnt, in einem Zwischenspeicher 6 gesammelt werden und aus diesem burstweise mit der Standard-Aufzeichnungs-Datenrate für CD, also 1,4112 Mbit/s zur Aufzeichnung abgegeben werden. Jeder Burst Daten in dem Zwischenspeicher wird auf dem Aufzeichnungsträger in einem jeweils zugeordneten Cluster mit einer festen Anzahl (je 98) von ATIP-Blöcken und EFM-Frames kontinuierlich aufgezeichnet. Danach ist entsprechend der herabgesetzten Netto-Datenrate Zeit zum neuen Positionieren. Wenn der Zwischenspeicher wieder voll ist, sollte die Schreibeinrichtung (Laser Optik und Magnetkopf) gerade wieder am Ende des zuletzt geschriebenen Cluster angekommen sein, bzw. kurz davor sein. Um dies erreichen zu können, ist es erforderlich, daß die Anzahl der Frames pro Cluster größer gleich ist dem Produkt aus Reduktionsfaktor K und der maximalen Anzahl der Frames pro Umdrehung (bei CD außen ungefähr 2220). Bei der MSC-Datenreduktion beträgt der Reduktionsfaktor K gleich 0,25 und die Anzahl der Frames pro Cluster sollte deshalb mindestens etwas größer als 555 sein.

Wegen der eindeutigen Adressierbarkeit über ATIP ist die Länge eines Cluster ein ganzzahliges Vielfaches der ATIP-Länge.

Wenn die Aufzeichnung an irgendeiner Stelle abbricht, so enthält der CIRC-Codierungsteil aufgrund der Codespreizung (interleaving) im Interleaving-Speicher, der im Reed-Solomon-Codierer 9 enthalten ist, noch Daten, die zu den vorauf aufgezeichneten gehören. In diesem Fall kann der Codierungsteil angehalten werden und dann beim Schreiben des nächsten Clusters wieder starten und damit die restlichen Daten in den Anfang des nächsten Clusters schreiben.

Dies ist nicht immer leicht zu realisieren, weil ein Stoppen der Hardware nicht immer unmittelbar möglich ist und weil die Gefahr des nicht exakten Aneinandersetzens der Daten besteht.

Deshalb wird ein aktuelles Cluster nicht völlig mit Nutzdaten gefüllt, sondern es wird entsprechend der Interleavinglänge vorher mit der Codierung der Nutzdaten aufgehört und dann am Ende des Clusters nur noch der Interleaving-Speicher leergeschrieben.

Neben dem sich aus dem Interleaving ergebenden Folgen ist zu beachten, daß zu Beginn des Aufzeichnungsvorgangs für ein Cluster die Abtasteinheit oder die Schreib-/Leseeinheit von Lesen auf Schreiben umgeschaltet wird. Dies kann jedoch diese Abtasteinheit (Laser) nicht immer sehr schnell und präzise durchführen. Daher gehen am Anfang eines Clusters häufig einige Daten verloren. Deshalb werden am Anfang eines Clusters einige Leerdaten, hier 1 bis 3 EFM-Frames geschrieben.

Um den Verlust von Leerdaten am Anfang und durch Leerschreiben des Interleaving-Speichers am Ende, der in jedem Cluster einmal auftritt, gering zu halten, wird daher ein Cluster nicht unbedingt so kurz wie möglich gehalten. Wegen der erforderlichen Organisation eines Inhaltsverzeichnisses für die aufgezeichneten Daten und der grundsätzlich vorhandenen Flexibilität des Aufzeichnungsträgers, die natürlich durch Cluster-Recording nicht beseitigt werden soll, ist die Länge eines Clusters auch nicht beliebig groß.

Für die MOD 13 mit Cluster-Recording ist hier folgende Clusterlänge $l_{CL}$ festgelegt:

$$l_{CL} = 1176 \text{ EFM - Frames } = 12 \text{ ATIP - Blöcke } = 0,16 \text{ sec.}$$

Die Verteilung innerhalb eines Clusters ist wie folgt:

| Anzahl der EFM-frames | Inhalt |
| --- | --- |
| 1 | Link-frame |
| 2 | run-in |
| 1029 | Data |
| 111 | Interleaving |
| 2 | run-out |
| 1 | Link-frame |
| 30 | unused |

Diese Ausführung führt dazu, daß 24696 Bit Nutzdaten in einem Cluster aufgezeichnet werden, der eigentlich den Platz von 28224 Bit einnimmt. Der Verlust an Speicherkapazität beträgt 1/8 = 12,5 %.

Weitere Folge dieser speziellen oben angegebenen Wahl ist, daß der Takt der reduzierten Nutzdaten mit dem "normalen CD" Takt in einem einfachen Verhältnis steht:

$$1/4 * (1 - 1/8) = 7/32$$

Die aufzeichenbare Brutto-Datenrate ist durch Clusterrecording wie gewünscht auf 1/4 reduziert, Netto steht aber wegen des 1/8 Verlusts nur 7/32 der Standarddatenrate zur Verfügung.

Die erzielbare Netto-Datenrate ist also im vorgenannten Fall:

$$7/32 * 1,4112 \text{ Mbit/sec} = 308,7 \text{ kHz/sec}$$

Dies entspricht der Angabe einer Quantisierung mit 3,5 Bit/sample, was mit modernen Datenreduktionsverfahren wie hier MSC sehr gut möglich ist. Wegen des einfachen Teilerverhältnisses von 7/32 ist bei der beschriebenen Auslegung zusätzlich eine einfache Synchronisierung externer, datenreduzierter Quellen mit dem Aufzeichnungsträger möglich.

Zusammengefaßt bedeutet Cluster-Recording also, daß die Nutzdaten nicht wie beim normalen CD-Format in kontinuierlicher Folge von 7350 EFM-Frames pro Sekunde mit jeweils 24 nutzbaren Bytes aufgezeichnet werden. Die Aufzeichnung erfolgt stattdessen in Clustern, die zwar in sich aus einer kontinuierlichen Folge einer bestimmten Anzahl von EFM-Frames bestehen, zwischen den Clustern ist die Aufzeichnung aber nicht kontinuierlich. Als Folge hiervon kann auf jeden Cluster wahlfrei lesend und insbesondere auch schreibend zugegriffen werden, ohne daß die in den zuvor oder dahinter liegenden Clustern aufgezeichnete Information gestört wird.

Für den wahlfreien schreibenden Zugriff auf einen Cluster sind wegen der ausreichend langen Lücken auch keine besonderen Maßnahme zum schnellen Hoch- und Herunterfahren des Lasers erforderlich.

Nach dem Schreiben von einem Cluster entsteht eine Pause, die zum Positionieren der Anfang des nächsten Clusters verwendet wird. Um den Anfang des nächsten Clusters zu finden, werden die ATIP-Blöcke am Ende des nächsten Clusters decodiert. Es ist daher möglich, so zu positionieren, daß der gesamte letzte Cluster noch einmal gelesen wird, bevor der unmittelbar nächste wieder geschrieben wird. Hierbei können Aufzeichnungsfehler festgestellt werden um daraus folgernd bei zu hoher Fehlerzahl den Aufzeichnungsvorgang insgesamt abzubrechen oder wenigstens eine Warnung an den Benutzer auszugeben.

In Weiterverfolgung der Fehlererkennung ist noch eine Fehlerkorrektur vorgesehen. Dazu werden die Daten des letzten Clusters im Zwischenspeicher erhalten. Zwei Strategien zur Fehlerkorrektur sind denkbar:

Zum einen wird neu auf den Anfang des fehlerhaften Clusters positioniert und dann dessen Daten noch einmal geschrieben. Unmittelbar anschließend folgen die Daten des folgenden Clusters. Für das Positionieren wird jedoch Zeit verbraucht, so daß eventuell die Pause zwischen zwei Schreibzyklen nicht groß genug ist für Positionieren, Korrektur lesen, neues Positionieren und Korrektur schreiben.

Weil ein Aufzeichnungsfehler auch mit einer Fehlstelle auf dem Aufzeichnungsträger verbunden sein kann, ist es besser, im Fehlerfalle das Schreiben der Daten im fehlerhaften Cluster im folgenden Cluster zu wiederholen und die eigentlich folgenden Daten dann in dem darauffolgenden Cluster zu schreiben. Der fehlerhafte Cluster wird dann markiert, damit er beim Auslesen einfach übersprungen werden kann.

Das Markieren wird im Inhaltsverzeichnis UTOC (User table of content) des Aufzeichnungsträgers vorgenommen oder in einem besonderen Cluster am Anfang und Ende der aktuellen kontinuierlichen Cluster-Aufzeichnung. Es ist auch möglich, den folgenden, zur Korrektur noch einmal geschriebenen Cluster so zu mar-

EP 0 573 413 B1

kieren (z.B. anderes Synchronisationswort), daß damit ein Fehler im vorangegangen Cluster mitgeteilt wird. Das bedeutet aber, daß bei der Wiedergabe immer ein Cluster im voraus gelesen werden muß.

Datenaufzeichnungen von Rechnern auf der Basis eines Betriebssystems wie z.B. MS-DOS erfolgen in Blöcken von 1024 Byte. Wenn ein Cluster entsprechend den obigen Angaben ausgelegt wird, so sind ohne weiteres 24 Blöcke mit 1024 Nutz Byte eventuell mit zusätzlichen Bits für Fehlerschutz in einem Cluster mit mindestens 1029 verwendbaren EFM-Frames aufzuzeichnen. Da auch die Adressierbarkeit gegeben ist, ist Cluster-Recording also auch zur Datenaufzeichnung in einem Rechner geeignet.

Wegen der stückweisen Aufzeichnung für die Dauer von 0,16 sec und der anschließenden Pause von 0,48 sec bis zur Aufzeichnung des folgenden Clusters ist eine Positionierungsstrategie vorgesehen, da nicht davon ausgegangen werden kann, daß sich der Laser nach Ablauf der Pause, gerade am Beginn der nächsten Clusters befindet.

Eine mögliche im folgenden erläuterte Strategie soll den logischen Ablauf verdeutlichen, eine hiervon abweichende Realisierung ist durchaus möglich.

Die vom MSC-Coder 4 des Ton-Datenreduktionsverfahrens gelieferten Daten mit 308,7 kBit/sec werden wie oben erwähnt in in dem Zischenspeicher 6 oder einem Wechselpuffer portioniert. Der Einlesetakt ist 308 700 Hz und der Auslesetakt ist 1411200 Hz. Die Länge der beiden Puffer ist jeweils 197568 Bit = 24696 Byte.

Das Schreiben des ersten Clusters wird bei ATIP (n) begonnen. Nach dem Schreiben von 1143 EFM-Frames wird der Schreibvorgang beendet. Nach Ablauf der nun folgenden Wartezeit von 0,48 sec wird der Wechselpuffer "Data ready" melden. Nun erfolgt ein Suchvorgang auf dem Block bei ATIP (n+12). Hierzu müssen maximal 4 Spuren nach innen übersprungen werden. Zusätzlich kann eine Wartezeit von maximal einer Umdrehung notwendig werden. Nun kann der nächste Cluster geschrieben werden, u.s.w..

Für die gesamte Positionierung stehen bis zu 400 msec zur Verfügrung. Innerhalb dieser Zeit muß die Positionierung sicher abgeschlossen sein.

Es kann davon ausgegangen werden, daß ein Sprung auf die nächst innere Nachbarspur mit großer Sicherheit ausgeführt werden kann. Daher ist weitere folgende Strategie möglich:

Das Schreiben des ersten Clusters wird bei ATIP (n) begonnen. Nach dem Schreiben von 1143 EFM-frames wird der Schreibvorgang beendet. Unmittelbar danach wird um eine Spur nach innen gesprungen und ein Suchvorgang nach ATIP (n+12) eingeleitet. Dieser wird solange wiederholt, bis der Zwischenspeicher 6 "Data ready" meldet. Beim nächsten Auffinden von ATIP (n+12) beginnt dann der Schreibvorgang des zweiten Clusters. Nach dem Ende dieses Schreibvorganges erfolgt wieder ein Spursprung nach innen und ein Suchvorgang nunmehr nach ATIP (n+24), u.s.w..

Vorteilhaft bei dieser Strategie ist, daß stets nur um eine Spur gesprungen werden muß, allerdings findet dieser Vorgang häufiger statt. Spätestens eine Umdrehung nach "Data ready" kann die Aufzeichnung des nächsten Clusters beginnen.

Führt man nach Schreiben des ersten Clusters zunächst einen Suchvorgang nach ATIP (n), das heißt nach dem Anfang des soeben geschriebenen Clusters durch, so können die soeben geschriebenen Daten zur Kontrolle gelesen werden. Eine Auswertung der aufgetretenen Fehler kann geeignet Maßnahmen einleiten, so zum Beispiel Warnsignale oder Anzeige der Fehlerrate.

Falls beim Kontrollesen nicht korrigierbare Fehler festgestellt werden, kann ein als fehlerhaft erkannter Cluster bei ATIP (n) nochmals bei ATIP (n+12) geschrieben werden. Dies wird in geeigneter Weise in der UTOC (User table of content) festgehalten, damit der fehlerhafte Cluster bei ATIP (n) bei der Wiedergabe übersprungen werden kann. Für eine Realisierung der beschriebenen Schreibwiederholung im Fehlerfalle ist der Zwischenspeicher 6 geeignet ausgebildet, z. 3. als zyklischer Dreifach-Wechselpuffer.

Das vorstehende Verfahren ist nicht auf eine Datenreduktion von Daten und ein bestimmtes Datenreduktionsverfahren wie hier MSC festgelegt. Ebenso kann eine Aufzeichnung und Wiedergabe mit nicht datenreduzierten Daten und/oder mit anderen Datenreduktionsverfahren reduzierten Datenraten auf einem Aufzeichnungsträger durchgeführt werden.

Eine weitere Möglichkeit zur Aufzeichnung oder Wiedergabe der Daten wäre es, die mittels MSC verminderte Datenrate mit Hilfe des Zwischenspeichers burstweise auf dem Aufzeichnungsträger aufzuzeichnen oder zu lesen und dann nach einer bestimmten Aufzeichnungszeit oder Wiedergabezeit eine Pause von der dreifachen Zeit einzulegen. Auf diese Weise kann in einem Durchlauf der Aufzeichnungsträger mit 25% gefüllt werden. Wenn man am Ende angelangt ist, kann man während einer ¾ wieder zum Anfang springen und in einem zweiten Durchgang weitere 25% der Platte füllen oder zu lesen u.s.w.. Dies erfordert eine schwierige Organisation des Platteninhaltes. Der Aufzeichnungsträger enthält dann entweder ein nur normales oder nur datenreduziertes Programm. Der definierte Sprung vom Ende zum Anfang der Spur ist kritisch.

Eine grundsätzlich andere Möglichkeit unabhängig von der vorstehend beschrieben Lösungen wäre es, die Abtastgeschwindigkeit entsprechend des Reduktionsfaktors herabzusetzen. Bei gleichbleibender Wellenlänge auf dem Aufzeichnungsträger ergebe das bei einem Reduktionsfaktor von 1/4 automatisch ein Viertel

6

der Aufzeichnungsdatenrate und die vierfache Spielzeit. Allerdings muß das CLV-System umschaltbar sein. Außerdem bekommen die Entzerrerschaltungen für die von dem Aufzeichnungsträger kommenden Signale nur Signale mit einem Viertel der normalen Frequenz und müssen daher umgeschaltbar sein. Eine Mischung "normaler" Aufzeichnungen mit datenreduzierten Aufzeichnungen auf einer Platte ist nur dann möglich, wenn eine schnelle Umschaltung der CLV um den Faktor ein Viertel bzw. Vier möglich ist.

Die Erfindung ist gleichfalls für eine Aufnahme und/oder Wiedergabe von digitalen Daten auf einem Magnetband mit PCM-Signalen oder für eine Aufnahme auf einem DAT (digital audio tape)-Band in einem DAT-Recorder verwendbar. Die Organisationsstruktur einer DAT-Aufnahme läßt sich in äquivalenter Weise zur dem vorstehend beschriebenen Verfahren mit geringen Änderungen festlegen.

## Patentansprüche

1. Verfahren zur Aufzeichnung und/oder Wiedergabe von einer Netto-Datenrate aufweisenden digitalen Daten, vorzugsweise Audio- und/oder Videodaten, auf einem abtastbaren, insbesondere rotierenden Aufzeichnungsträger, der wenigstens eine Spur aufweist, in der die Daten bei der Aufzeichnung burstweise aufgezeichnet und von der bei einer Wiedergabe die burstweise aufgezeichneten Daten wieder abgetastet werden, **dadurch gekennzeichnet**, daß jeder Burst aufzuzeichnender oder aufgezeichneter Daten auf dem Aufzeichnungsträger in einem Teilstück der Spur- im folgenden auch Cluster genannt - unabhängig seiner Netto-Datenrate mit einer vorgegebenen physikalischen Schreibdatenrate auf dem Aufzeichnungsträger aufgezeichnet wird oder ist oder mit einer vorgegebenen physikalischen Abtastlesedatenrate aus dem Aufzeichnungsträger ausgelesen wird, daß die Netto-Datenrate geringer als die vorgegebene Schreibdatenrate oder Abtastlesedatenrate ist, daß die Daten eines Bursts unter Verwendung eines Zwischenspeichers (6) zur Umwandlung der Netto-Datenrate der aufzuzeichnenden Daten in die Schreibdatenrate oder zur Umwandlung der Abtastlesedatenrate in die Netto-Datenrate der wiederzugebenden Daten im Aufzeichnungs- und/oder Wiedergabegerät zwischengespeichert werden oder sind, und daß nach dem Schreiben oder Lesen dieser Daten auf oder von dem Aufzeichnungsträger eine Pause beim Schreiben oder Lesen eingelegt wird, und daß während der Pause nach dem Schreiben oder Lesen eines Clusters bzw. Burst die Abtast/Aufzeichnungs- oder Wiedergabeeinheit auf den Anfang des folgenden Clusters bzw. Bursts positioniert wird oder ist.

2. Verfahren nach Anspruch 1, **dadurch gekennzeichnet**, daß die Netto-Datenrate der aufzuzeichnenden Daten unter Verwendung eines Datenreduktionsverfahrens vermindert wird oder ist.

3. Verfahren nach Anspruch 1 oder 2, **dadurch gekennzeichnet**, daß ein Burst Daten unabhängig seiner Netto-Datenrate stets mit der gleichen physikalischen Aufzeichnungs- bzw. Schreibdatenrate auf dem Aufzeichnungsträger aufgezeichnet wird.

4. Verfahren nach Anspruch 1, 2 oder 3, **dadurch gekennzeichnet**, daß jeder Burst Daten mit den CD-Standard-Aufzeichnungsparametern bzw. CD-Standard Aufzeichnungsdatenrate von 1,4112 Mbit/sec auf dem Aufzeichnungsträger aufgezeichnet wird.

5. Verfahren nach einem der vorhergehenden Ansprüche, **dadurch gekennzeichnet**, daß jeder Burst Daten mit wenigstens einem Adressdatum für die Position auf dem Aufzeichnungsträger und/oder jeder Burst Daten mit wenigstens einem Adressdatum für die Position des nachfolgenden Bursts Daten versehen wird.

6. Verfahren nach einem der vorhergehenden Ansprüche, **dadurch gekennzeichnet**, daß die aufzuzeichnenden Daten mit einem Fehlerschutzcode, vorzugsweise einem Cross-Interleaved-Reed-Solomon-Coder (BIRC)-Fehlerschutzcode, versehen werden und/oder daß die aufzuzeichnenden Daten einem Interleaving (Codespeizung) unterworfen werden, und/oder daß die Daten mittels eines Kanalcodes, vorzugsweise eines EFM-Codes (eight to fourteen modulation), der die Daten jeweils in EFM-Frames strukturiert, auf dem Aufzeichnungsträger aufgezeichnet werden, wobei jeder DFM-Frame vorzugsweise 24 Byte Nutzdaten enthält.

7. Verfahren nach einem der vorhergehenden Ansprüche, **dadurch gekennzeichnet**, daß vor dem Schreiben eines Clusters das vorher beschriebene Cluster gelesen wird und/oder bei fehlerhafter Aufzeichnung eines Clusters die Aufzeichnung in einem folgenden Cluster wiederholt wird, und/oder daß das fehlerhafte Cluster markiert wird.

8. Aufzeichnungsträger, vorzugsweise eine Magneto-Optische-Disc (MOD) oder Compact Disc (CD), mit wenigstens einer Spur zur Aufzeichnung von digitalen Daten, insbesondere Audio- und/oder Videodaten, **die mit einem Verfahren gemäß einem der Ansprüche 1 - 7 aufgezeichnet sind, dadurch gekennzeichnet**, daß jeder Burst Daten ein Adressdatum für die Position auf dem Aufzeichnungsträger und/oder ein Adressdatum für die Position des nachfolgenden Bursts Daten aufweist.

9. Aufzeichnungsträger nach Anspruch 8, **dadurch gekennzeichnet**, daß die Spur spiralförmig ist, und/oder daß die spiralförmige Spur des Aufzeichnungsträger vorformatiert ist und Daten zur Kennzeichnung einer absoluten Position auf dem Aufzeichnungsträger enthält.

10. Aufzeichnungsträger nach Anspruch 9, **dadurch gekennzeichnet**, daß die spiralförmige Spur mittels einer ATIP (absolut time in pre-groove) - Methode vorformatiert ist und/oder jedes mit der ATIP-Methode vorformartierte Positionsdatum einen ATIP-Block bildet, dessen Länge der Aufzeichnungslänge von vorzugsweise 98 EFM-Frames entspricht und/oder daß die Länge eines Clusters dem ganzzahligen Vielfachen einer ATIP-Block-Länge, vorzugsweise der Zwölffachen ATIP-Block-Länge, entspricht.

11. Aufzeichnungsträger nach einem der Ansprüche 9 und/oder 10, **dadurch gekennzeichnet**, daß die spiralförmige Spur horizontal moduliert ist, vorzugsweise mit einer der Audio-Standard-CD-Abtastfrequenz (44,1 kHz) proportionalen Frequenz $f_{prop}$ horizontal moduliert ist.

12. Aufzeichnungsträger nach einem der Ansprüche 8 - 11, **dadurch gekennzeichnet**, daß die Anzahl der EFM-Frames pro Cluster größer gleich ist dem Produkt aus Reduktionsfaktor K des Reduktionsverfahrens und der maximalen Anzahl der Frames pro Umdrehung $m_{max}$ des rotierenden Aufzeichnungsträgers und-/oder daß ein Cluster wenigstens aus 555 EF-M-Frames, vorzugsweise aus 1176 EFM-Frames, besteht.

13. Aufzeichnungsträger nach Anspruch 12, **dadurch gekennzeichnet**, daß die 1176 EFM-Frames eines Clusters sich zusammensetzen aus drei EFM-Frames für den Einlauf, 1029 EFM-Frames für die Nutzdaten, 110 FM-Frames für das Leerschreiben des Interleaving-Speichers, 34 EFM-Frames bleiben ungenutzt oder sind für den Auslauf.

14. Aufzeichnungsgerät und/oder Wiedergabegerät zur Aufnahme eines Aufzeichnungsträgers (11) nach einem der Ansprüche 8 - 13 und/oder zur Durchführung des Verfahrens nach einem der Ansprüche 1 - 7, **dadurch gekennzeichnet**, daß im Aufzeichnungs- und/oder Wiedergabegerät ein von einer Steuereinheit (8) gesteuerter Zwischenspeicher (6) zur Speicherung der Daten eines Bursts vorgesehen ist, daß der Einlesetakt des Zwischenspeichers unterschiedlich zum Ausleseatakt ist, daß bei der Aufzeichnung der Auslesetakt größer als der Einlesetakt ist und daß bei der Wiedergabe der Einlesetakt größer als der Auslesetakt ist, daß nach dem Schreiben oder Lesen dieser Daten auf oder vom dem Aufzeichnungsträger eine Pause des Schreibens oder Lesens einglegt wird, und daß während dieser Pause die Abtast/Aufzeichnungs- oder Wiedergabeeinheit auf den Anfang des folgenden Clusters bzw. Bursts positioniert wird oder ist.

15. Aufzeichnungsgerät nach Anspruch 14, **dadurch gekennzeichnet**, daß die von einem Coder (4) des Datenreduktionsverfahrens gelieferten Daten in dem Zwischenspeicher (6) portioniert sind, wobei der Zwischenspeicher (6) vorzugsweise als zyklischer Dreifach-Wechselpuffer ausgebildet ist.

16. Aufzeichnungsgerät nach Anspruch 14 oder 15, **dadurch gekennzeichnet**, daß die zur Audio-Standard-CD-Abtastfrequenz proportionale Frequenz $f_{prop}$ im Bi-Phase-Format mit den Daten phasenmoduliert ist, daß die Aufzeichnungs- oder Abtasteinheit bei Beginn des Aufzeichnungsvorgangs für ein Cluster von Lesen auf Schreiben umschaltbar ist.

17. Aufzeichnungsgerät nach einem der vorhergehenden Ansprüche 14 - 16, **dadurch gekennzeichnet**, daß das Aufzeichhnungsgerät einen Coder und/Decoder zur Datenreduktion oder Datendereduktion enthält, daß der Coder (MSC) die Nettodatenrate der aufzuzeichnenden Daten unter Verwendung eines Datenreduktionsverfahrens vermindert und der Decoder die durchgeführte Datenreduktion wieder rückgängig macht.

## Claims

1. Method for the recording and/or reproduction of digital items of data having a net data rate, preferably audio and/or video items of data, on a scannable, especially rotating recording medium which has at least one track in which the items of data are recorded in burst-like manner during the recording and from which the items of data that were recorded in burst-like manner are scanned again during a reproduction, characterised in that, each burst of data that is to be recorded on the recording medium, or each burst of data that is recorded on the recording medium, is recorded on the recording medium in a segment of the track - hereinafter also referred to as a cluster - independently of its net data rate using a predetermined physical write-data-rate, or is read-out from the recording medium using a predetermined physical scanning-read-data-rate, that the net data rate is smaller then the predetermined write-data-rate or the scanning-read-data-rate, that the items of data of a burst are buffer stored in the recording and/or reproduction device by using a buffer store (6) for the conversion of the net data rate of the data which is to be recorded into the write-data-rate or for the conversion of the scanning-read-data-rate into the net data rate of the items of data which are to be reproduced and that, after the writing or reading of these items of data onto or from the recording medium, there is a pause from reading or writing and that during the pause following the reading or writing of a cluster or burst, the scanning/recording or reproduction unit is positioned at the beginning of the following cluster or burst.

2. Method in accordance with Claim 1, characterised in that, the net data rate of the data which is to be recorded is reduced by using a data reduction process.

3. Method in accordance with Claim 1 or 2, characterised in that, a data burst is always recorded on the recording medium with the same physical recording-data-rate or write-data-rate independently of its net data rate.

4. Method in accordance with Claim 1, 2 or 3, characterised in that, each data burst is recorded on the recording medium using the standard CD recording parameters or standard CD recording data rate of 1.4112 Mbit/sec.

5. Method in accordance with any of the preceding Claims, characterised in that, each data burst is provided with at least one address data item for the position on the recording medium and/or each data burst is provided with at least one address data item for the position of the succeeding data burst.

6. Method in accordance with any of the preceding Claims, characterised in that, the items of data which are to be recorded are provided with an error protection code, preferably a cross-interleaved Reed-Solomon-Coder (BIRC) error protection code, and/or, that the items of data which are to be recorded are subjected to an interleaving process (code spread), and/or, that the items of data are recorded on the recording medium by means of channel code, preferably an EFM code (eight to fourteen modulation) which structures the items of data into respective EFM frames wherein each DFM frame preferably contains 24 bytes of useful data.

7. Method in accordance with any of the preceding Claims, characterised in that, the previously written cluster is read before the writing of a cluster and/or the recording is repeated in a following cluster in the event of a defective recording of a cluster and/or that the defective cluster is marked.

8. Recording medium, preferably a magneto-optic disc (MOD) or compact disc (CD) including at least one track for the recording of digital items of data, especially audio and/or video items of data, which are recorded by a method in accordance with any of the Claims 1 - 7, characterised in that, each data burst has an address data item for the position on the recording medium and/or an address data item for the position of the succeeding data burst.

9. Recording medium in accordance with Claim 8, characterised in that, the track is helical in shape, and/or that the helical track of the recording medium is pre-formatted and contains items of data for identifying an absolute position on the recording medium.

10. Recording medium in accordance with Claim 9, characterised in that, the helical track is pre-formatted by means of an ATIP (absolute time in pre-groove) method and/or each position data item that was pre-formatted by the ATIP method forms an ATIP block whose length preferably corresponds to the recording length of 98 EFM frames and/or that the length of a cluster corresponds to the integral multiple of an ATIP block length, preferably to 12 times the ATIP block length.

11. Recording medium in accordance with either of the Claims 9 and/or 10, characterised in that, the helical track is horizontally modulated, preferably, that it is horizontally modulated using a frequency $f_{prop}$ which is proportional to the standard audio CD scanning frequency (44.1 kHz).

12. Recording medium in accordance with any of the Claims 8 - 11, characterised in that, the number of EFM frames per cluster is greater than or equal to the product of the reduction factor K of the reduction process and the maximum number of frames per revolution $m_{max}$ of the rotating recording medium and/or that a cluster consists of at least 555 EFM frames, preferably of 1176 EFM frames.

13. Recording medium in accordance with Claim 12, characterised in that, the 1176 EFM frames of a cluster are composed of three EFM frames for the run-in, 1029 EFM frames for the useful items of data, 110 FM frames for the blank writing of the interleaving store, 34 EFM frames remaining unused or being for the run-out.

14. Recording device and/or reproduction device for the insertion of a recording medium (11) in accordance with any of the Claims 8 - 13 and/or for carrying out the method in accordance with any of the Claims 1 - 7, characterised in that, a buffer store (6), which is controlled by a control unit (8) and is used for storing the items of data of a burst, is provided in the recording and/or reproduction device, that the read-in clock rate of the buffer store is different from the read-out clock rate, that the read-out clock rate is greater than the read-in clock rate during the recording and that the read-in clock rate is greater than the read-out clock rate during the reproduction, that, after the writing or reading of these items of data onto or from the recording medium, there is a pause from reading or writing and that during this pause the scanning / recording or reproduction unit is positioned at the beginning of the following cluster or burst.

15. Recording device in accordance with Claim 14, characterised in that, the items of data delivered by a coder (4) from the data reduction process are positioned in the buffer store (6) whereby the buffer store (6) is preferably constructed as a cyclical triple exchange buffer.

16. Recording device in accordance with Claim 14 or 15, characterised in that, the frequency $f_{prop}$, which is proportional to the standard audio CD scanning frequency, is phase modulated in the bi-phase format by the items of data, that the recording or scanning unit can be switched from reading to writing at the beginning of the recording process for a cluster.

17. Recording device in accordance with any of the preceding Claims 14 - 16, characterised in that, the recording device contains a coder and/decoder for the data reduction or de-reduction of the data, that the coder (MSC) reduces the net data rate of the items of data which are to be recorded using a data reduction process and the decoder restores the data reduction that was carried out.

**Revendications**

1. Procédé pour l'enregistrement et/ou la reproduction de données numériques présentant un débit net de données, de préférence de données audio et/ou vidéo, sur un support d'enregistrement explorable, notamment rotatif contenant au moins une piste, sur laquelle les données sont enregistrées par train lors de l'enregistrement et les trains de données enregistrées sont réexplorées lors de la reproduction, **caractérisé en ce que** chaque train de données à enregistrer ou enregistrées sur le support d'enregistrement est enregistré ou déjà écrit sur une portion de la piste - également appelé ci-après-groupe indépendamment de son débit net de données et avec un débit physique d'écriture de données prédéterminé, ou est extrait en lecture du support d'enregistrement avec un débit physique d'exploration de données prédéterminé, **en ce que** le débit net de données est inférieur au débit d'écriture ou au débit d'exploration des données prédéterminé, **en ce que** les données d'un train sont introduites ou déjà stockées de manière temporaire dans un appareil d'enregistrement et/ou de reproduction au moyen d'une mémoire intermédiaire (6) ou sont extraites par lecture du support d'enregistrement avec un débit physique d'exploration de données déterminé, **en ce qu'**une pause dans la lecture ou l'écriture est insérée après l'écriture ou la lecture de ces données sur ou à partir du support d'enregistrement et **en ce que**, pendant la pause après l'écriture ou la lecture d'un groupe ou d'un train, l'unité d'exploration/enregistrement ou l'unité de reproduction est mise en position ou déjà positionnée au début du groupe ou du train suivant.

2. Procédé selon la revendication 1, **caractérisé en ce que** le débit net de données des données à enregistrer est ou a été réduit au moyen d'un procédé de compression des données.

3. Procédé selon la revendication 1 ou 2, **caractérisé en ce qu'**un train de données est enregistré sur le support d'enregistrement toujours avec le même débit physique d'écriture ou de lecture, indépendamment de son débit net de données.

4. Procédé selon la revendication 1, 2 ou 3, **caractérisé en ce que** chaque train de données est enregistré sur le support avec les paramètres d'enregistrement standard de disque audionumérique (CD), notamment le débit de données d'enregistrement standard de disque audionumérique (CD) de 1,4112 Mbit par seconde.

5. Procédé selon l'une des revendications précédentes, **caractérisé en ce que** chaque train de données est pourvu d'au moins une donnée d'adresse pour la position sur le support d'enregistrement et/ou chaque train de données est pourvu d'au moins une donnée d'adresse pour la position du train de données suivant.

6. Procédé selon l'une des revendications précédentes, **caractérisé en ce que** les données à enregistrer sont munies d'un code de protection contre les erreurs, notamment un code de protection BIRC d'un codeur Cross-Interleaved de Reed-Solomon et/ou **en ce que** les données à enregistrer sont soumises à un interleaving (brassage du code), et/ou **en ce que** les données sont enregistrées sur le support d'enregistrement au moyen d'un code de canal, de préférence un code EFM (eight to fourteen modulation), ce code structurant les données en séquences EFM, chaque séquence EFM contenant de préférence 24 octets de données utiles.

7. Procédé selon l'une des revendications précédentes, **caractérisé en ce qu'**avant l'écriture d'un groupe, on lit le groupe écrit auparavant et/ou **en ce que**, en cas d'enregistrement défectueux d'un groupe, on répète l'enregistrement dans un groupe suivant et/ou **en ce qu'**on marque le groupe défectueux.

8. Support d'enregistrement, de préférence un disque magnéto-optique (MOD) ou un disque audionumérique (CD), comprenant au moins une piste pour l'enregistrement de données numériques, notamment de données audio et/ou vidéo, ces données ayant été enregistrées au moyen d'un procédé selon l'une des revendications 1 à 7, **caractérisé en ce que** chaque train de données est pourvu d'une donnée d'adresse pour la position sur le support d'enregistrement et/ou une donnée d'adresse pour la position du train de données suivant.

9. Support d'enregistrement selon la revendication 8, **caractérisé en ce que** la piste est en forme de spirale, et/ou **en ce que** la piste en forme de spirale du support d'enregistrement a été mise en forme préalablement et contient des données pour l'identification d'une position absolue sur le support d'enregistrement.

10. Support d'enregistrement d'après la revendication 9, **caractérisé en ce que** la piste en forme de spirale est mise en forme préalablement au moyen d'une méthode ATIP (absolute time in pre-groove) et/ou chaque donnée de position mise en forme préalablement avec la méthode ATIP forme un bloc ATIP, dont la longueur correspond à la longueur d'enregistrement de 98 séquences EFM de préférence et/ou **en ce que** la longueur d'un groupe correspond au multiple entier d'une longueur de bloc ATIP, de préférence à douze fois la longueur d'un bloc ATIP.

11. Support d'enregistrement selon l'une des revendications 9 ou 10, **caractérisé en ce que** la piste en forme de spirale est modulée longitudinalement, de préférence avec une fréquence $f_{prop}$ proportionnelle à la fréquence d'échantillonnage standard pour disque audionumérique (44,1 kHz).

12. Support d'enregistrement selon une des revendications 8 à 11, **caractérisé en ce que** le nombre de séquences EFM par groupe est supérieur au produit du facteur de compression K du procédé de compression et du nombre maximal de séquences par rotation $m_{max}$ du support d'enregistrement en rotation et/ou **en ce qu'**un groupe se compose d'au moins 555 séquences EFM, de préférence de 1176 séquences EFM.

13. Support d'enregistrement d'après la revendication 12, **caractérisé en ce que** les 1176 séquences EFM d'un groupe se composent de 3 séquences EFM pour le départ, de 1029 séquences EFM pour les données utiles, de 110 séquences EFM pour le remplissage de la mémoire d'interleaving, 34 séquences EFM n'étant pas utilisées ou étant destinées à la libération.

14. Appareil d'enregistrement et/ou appareil de reproduction pour l'admission d'un support d'enregistrement (11) selon l'une des revendications 8 à 13 et/ou pour la réalisation du procédé selon l'une des revendications 1 à 7, **caractérisé en ce qu'** une mémoire intermédiaire (6) commandée par une unité de contrôle (8) est prévue pour le stockage des données d'un train, **en ce que** le rythme de chargement de la mémoire intermédiaire est différent du rythme d'extraction par lecture, **en ce que** le rythme d'extraction par lecture est supérieur au rythme de chargement lors de l'enregistrement, **en ce que** le rythme de chargement est supérieur au rythme d'extraction par lecture lors de la reproduction, **en ce qu'**on insère une pause de l'écriture ou de la lecture après l'écriture ou la lecture de ces données sur ou à partir du support d'enregistrement, et **en ce que** l'unité d'exploration/enregistrement ou l'unité de reproduction est mise en position ou déjà positionnée sur le début du groupe ou du train suivant, pendant cette pause.

15. Appareil d'enregistrement selon la revendication 14, **caractérisé en ce que** les données fournies par un codeur (4) du procédé de compression de données sont partagées dans la mémoire intermédiaire (6), la mémoire intermédiaire (6) étant de préférence aménagée comme un tampon cyclique à triple alternance.

16. Appareil d'enregistrement selon la revendication 13 ou 15, **caractérisé en ce que** la fréquence $f_{prop}$ proportionnelle à la fréquence d'exploration standard de disque audionumérique est soumise à une modulation de phase avec les données dans un format biphase et l'unité d'enregistrement ou l'unité d'exploration est commutable de lecture à écriture au début d'une opération d'enregistrement pour un groupe.

17. Appareil d'enregistrement selon l'une des revendications 14 à 16, **caractérisé en ce que** l'appareil d'enregistrement contient un codeur/décodeur pour la compression des données ou la décompression de données, et **en ce que** le codeur (MSC) réduit le débit net des données à enregistrer au moyen d'un procédé de compression de données et le décodeur annule la compression de données effectuée.

EP 0 573 413 B1

| | | | |
|---|---|---|---|
| Eingang | 2: | Audio in | |
| Ausgang | 4: | Coded Data | |
| | 13: | Data Ready | |
| | 14: | ATIP OK | |
| | 12: | Output Contr | |
| Ausgang | 10: | Rec.-Data | |

1.Burst    2.Burst

FIG.1